# EUROPÄISCHE PATENTSCHRIFT

(11) **EP 2 583 070 B1**
(45) Veröffentlichungstag und Bekanntmachung des Hinweises auf die Patenterteilung: **20.01.2016**
(21) Anmeldenummer: 11741135.5
(22) Anmeldetag: 17.06.2011
(51) Int. Cl.: G01K 7/21, G01D 3/02, G01K 1/00

(54) **MESSUMFORMER MIT ZWEI ÜBERTRAGUNGSKANÄLEN**
MEASURING TRANSDUCER HAVING TWO TRANSMISSION CHANNELS
CONVERTISSEUR DE MESURE À DEUX CANAUX DE TRANSMISSION

(30) Priorität: 18.06.2010 DE 102010017465
(43) Veröffentlichungstag der Anmeldung: 24.04.2013
(73) Patentinhaber: Phoenix Contact GmbH & Co. KG, 32825 Blomberg (DE)
(72) Erfinder: MEIER, Heinz-W. Meier, 32689 Kalletal (DE); ZINK, Fabian, 32756 Detmold (DE)
(74) Vertreter: Michalski Hüttermann & Partner Patentanwälte mbB
(86) Internationale Anmeldenummer: PCT/EP2011/060139
(87) Internationale Veröffentlichungsnummer: WO 2011/157832

(56) Entgegenhaltungen:
- DE-A1- 3 030 990
- DE-A1- 19 652 988
- DE-U1- 9 211 664

## Beschreibung

Die Erfindung betrifft einen Messumformer, insbesondere einen Messumformer, der zwei Übertragungskanäle aufweist.

Messumformer werden in verschiedensten Einsatzbereiche verwendet. Ihre Aufgabe ist es eine Eingangssignal eines Mess-Signalgebers in ein gewünschtes Ausgangssignal umzuformen. Dies ist immer dann erforderlich wenn das bereitgestellte Messsignal inkompatibel mit nachfolgenden Verarbeitungseinheiten ist.

Prinzipiell sind diese Messumformer rein analog oder rein digital aufgebaut.

Bei einem digitalen Aufbau wird das Eingangsmesssignal durch einen Analog-Digital-Wandler gewandelt, unter Umständen durch einen Microcontroller nachbearbeitet, und anschließend durch einen Digital-Analog-Wandler in ein Analogsignal zurückgewandelt.

Mittels einer Nachbearbeitung wird hierbei typischerweise eine Linearisierung vorgenommen, so dass Nichtlinearitäten des Mess-Signalgebers als auch der Analog-Digital-Wandlung im Ausgangssignal im Wesentlichen nicht mehr sichtbar sind. Diese Linearisierung kann sowohl auf allgemein bekannten physikalischen Eigenschaften als auch auf gemessenen Parametern des Mess-Signalgebers und/oder des digitalen Messumformers beruhen.

Nachteilig an diesen digitalen Messumformern ist, dass sie relativ träge reagieren, so dass Antwortzeiten auf einen eingangsseitigen Sprung bis in den oberen 100 ms Bereich festzustellen sind.

Bei einem analogen Aufbau sind die Antwortzeiten auf einen eingangsseitigen Sprung im Allgemeinen deutlich geringer, jedoch gestaltet sich bei einem analogen Aufbau die Realisierung einer Linearisierung erheblich schwieriger und erheblich kostenintensiver.

Aus der DE 30 30 990 Al ist eine Linearisierungsschaltung für ein Signal bekannt. Die Linearisierungsschaltung umfasst eine Vorverstärkeranordnung, deren Ausgangssignal über einen Widerstand und parallel dazu über einen Übertragungskanal mit einer digitalen Signalverarbeitung übertragen wird.

Die beiden übertragenen Signale werden kombiniert so dass das kombinierte Signal am Eingang eines weiteren Verstärkers anliegt. Ähnliche Schaltungen sind aus der DE 92 11 664 U1 sowie der DE 196 52 988 Al bekannt.

Es ist daher eine Aufgabe der Erfindung einen Messumformer zur Verfügung zu stellen, der einen oder mehrere Nachteile aus dem Stand der Technik in erfinderischer Weise löst.

Die Erfindung schlägt hierzu einen Messumformer vor, aufweisend einen ersten Übertragungskanal), der ein analoges Messeingangssignal (I) in einer analogen Weise aufbereitet und als aufbereitetes Messsignal zur Verfügung stellt, wobei der erste Übertragungskanal einen Modulator, einen Übertrager und einen Demodulator aufweist, der Messumformer weiterhin einen zweiten Übertragungskanal und eine Kombinationseinheit aufweist, wobei der zweite Übertragungskanal das analoge Messeingangssignal in einer digitalen Weise aufbereitet und als Beeinflussungssignal zur Verfügung stellt, und die Kombinationseinheit das aufbereitete Messsignal und das Beeinflussungssignal kombiniert und als Messausgangssignal zur Verfügung stellt.

In einer Weiterbildung der Erfindung weist der zweite Übertragungskanal einen Opto-Koppler aufweist.

In noch einer weiteren Ausformung der Erfindung weist der zweite Übertragungskanal eine arithmetische Recheneinheit aufweist.

Gemäß einer weiteren Ausgestaltung der Erfindung trägt das Beeinflussungssignal zum Messausgangssignal weniger als zur Hälfte, bevorzugt +/- 10 ... 5 %, bei.

Gemäß einer noch weiteren Ausgestaltung der Erfindung weist der zweite Übertragungskanal eine Rückkoppelung des Messausgangssignals zum Vergleich des Messeingangssignals mit dem Messausgangssignal auf.

Gemäß einer noch weiteren Ausgestaltung der Erfindung ist die Rückkoppelung abschaltbar ausgeführt.

In einer Weiterbildung der Erfindung ist das analoge Messeingangssignal ein Temperaturmesseingangssignal.

In einer weiteren Ausgestaltung der Erfindung weist ein Messsystem einen Temperatursensor und einen erfindungsgemäßen Messumformer auf.

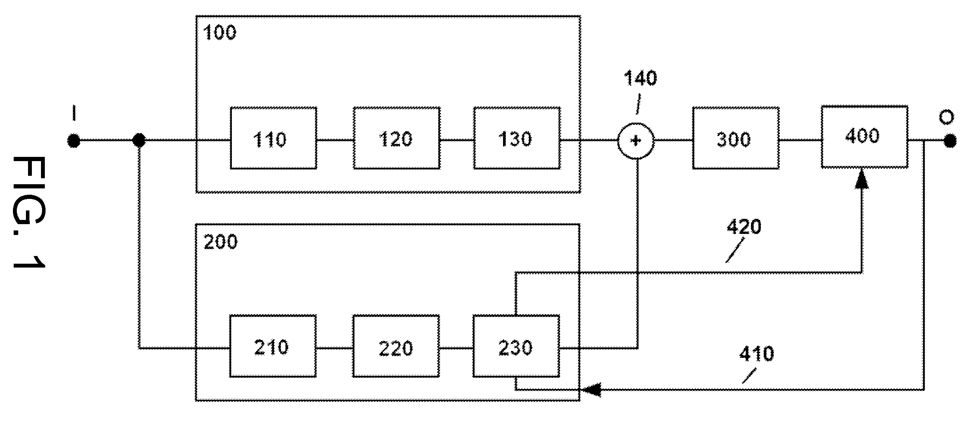

Nachfolgend wird die Erfindung unter Verweis auf die Figur 1 eingehender erläutert werden. Figur 1 zeigt eine schematische Darstellung eines erfindungsgemäßen Messumformers.

Figur 1 zeigt einen erfindungsgemäßen Messumformer. Dieser weist einen ersten Übertragungskanal 100 und einen zweiten Übertragungskanal 200 auf.

Der erste Übertragungskanal 100 bereitet ein analoges Messeingangssignal I eines Mess-Signalgebers einer analogen Weise auf und stellt es als aufbereitetes Messsignal zur Verfügung.

Der zweite Übertragungskanal 200 bereitet ebenfalls das analoge Messeingangssignal I auf stellt es als Beeinflussungssignal zur Verfügung.

Sowohl das aufbereitete Messsignal und als auch das Beeinflussungssignal werden kombiniert als Messausgangssignal O zur Verfügung gestellt.

Im Unterschied zum ersten Übertragungskanal 100 bei dem ein analoges Messeingangssignal I eines Mess-Signalgebers in einer analogen Weise aufbereitet wird, bereitet der zweite Übertragungskanal 200 das analoge Messeingangssignal I des Mess-Signalgebers in einer digitalen Weise auf.

Im analogen Zweig des Messumformers, d.h. im ersten Übertragungskanal, kann zur Signalverarbeitung ein Modulator 110 und einen Demodulator 130 vorgesehen sein.

Ihre Aufgabe innerhalb des ersten Übertragungskanal 100 ist es, ein Messeingangssignal I eines Mess-Signalgebers in ein gewünschtes Ausgangssignal umzuformen. Hierbei kann durch geeignet Wahl des Modulators 100 als auch des Demodulators die gewünschten Eingangsbereiche des Messeingangssignal I und die gewünschten Ausgangsbereiche eingestellt werden.

Weiterhin kann der erste Übertragungskanal 100 einen Übertrager 120 aufweisen. Mit Hilfe des Übertragers 120 können sowohl Verhältnisse übersetzt werden und so die gewünschten Eingangsbereiche des Messeingangssignal I und die gewünschten Ausgangsbereiche weiter eingestellt werden als auch bei geeigneter Ausgestaltung eine galvanische Trennung des Messeingangssignal von nachfolgenden Verarbeitungsstufen erreicht werden.

Der zweite Übertragungskanal 200 weist einen Analog-Digital-Wandler 210 und einen Digital-Analog-Wandler 230 auf. Ihre Aufgabe innerhalb des ersten Übertragungskanal 200 ist es, ein Messeingangssignal I eines Mess-Signalgebers in ein gewünschtes Ausgangssignal umzuformen. Hierbei kann durch geeignet Wahl oder Programmierung des Analog-Digital-Wandler 210 und/oder des Digital-Analog-Wandler 230 erreicht werden, dass die gewünschten Eingangsbereiche des Messeingangssignal I und die gewünschten Ausgangsbereiche passend eingestellt werden.

Weiterhin kann der zweite Übertragungskanal 200 noch einen Opto-Koppler aufweisen, wodurch eine galvanische Trennung des Messeingangssignals von nachfolgenden Verarbeitungsstufen erreicht werden kann.

Weiterhin kann sowohl der Analog-Digital-Wandler 210 als auch der Digital-Analog-Wandler 230 eine arithmetische Recheneinheit aufweisen. Mit dieser arithmetischen Recheneinheit kann z.B. eine Bereichsumsetzung als auch eine Linearisierung durchgeführt werden.

Das Ausgangssignal des ersten Übertragungskanals 100 und das als Beeinflussungssignal bezeichnete Ausgangssignal des zweiten Übertragungskanals 200 werden einer Kombinationseinheit 140 zugeführt.

Hierbei kann der Grad mit dem die Signale jeweils in das kombinierte Messausgangssignal O einfließen unterschiedlich ausgestaltet sein.

Durch die Ausgestaltung des ersten Übertragungskanals 100 als analoger Übertragungskanal und des zweiten Übertragungskanals 200 als digitaler Übertragungskanal kann der jeweilige Vorteil beider Verarbeitungsarten genutzt werden. Hier ermöglicht der analoge Übertragungskanal eine schnelle Antwortzeit während über den digitalen Übertragungskanal eine Linearisierung als auch eine Parametrisierung von Bauteiltoleranzen sowohl eines Messsignal-Gebers als auch des Messumformers insgesamt vorgenommen werden kann.

In einer vorteilhaften Ausgestaltung ist der Anteil des zweiten Übertragungskanals gering, d.h., das Beeinflussungssignal trägt zum Messausgangssignal weniger als zur Hälfte, bevorzugt +/- 10 ... 5 %, bei.

Wenn erforderlich kann der Messumformer eine Ausgangsstufe 300 zur Verstärkung des durch die Kombinationseinheit 140 erhaltenen kombinierten Signals aufweisen.

In einer weiteren Ausgestaltung der Erfindung kann der zweite Übertragungskanal 200 eine Rückkoppelung 410 des tatsächlichen Messausgangssignals O zum Vergleich des Messeingangssignal I mit dem tatsächlichen Messausgangssignal O aufweisen.

Zeigt ein Vergleich an, dass das tatsächliche Ausgangssignal O nicht in dem gewünschten Masse zu dem Messeingangssignal I korreliert, so kann mittels einer Schaltverbindung 420 eine Schaltstufe 400 im Ausgangszweig des Messumformers gesteuert werden, so dass das Ausgangssignal in einen sicheren Zustand versetzt wird. Dieser Zustand kann beispielsweise durch SIL vorgegeben sein.

Die Schaltstufe 400 kann beispielsweise als Transistor ausgestaltet sein, wobei die Schaltverbindung 420 das Gate oder die Basis oder dergleichen steuert.

Die Rückkoppelung 410 als auch die Schaltleitung 420 kann abschaltbar ausgeführt.

Optional kann auch die Ausgangsstufe 300 mittels der Rückkoppelung geschaltet werden.

Ein Vergleich, dass das tatsächliche Ausgangssignal O nicht in dem gewünschten Masse zu dem Messeingangssignal I korreliert, kann dabei sowohl analog als auch digital durchgeführt werden.

Wird der Vergleich digital ausgeführt, so wird das tatsächliche Ausgangssignal O vor seiner Verarbeitung einer Analog-digital-Wandlung unterzogen. Das Messeingangssignal I liegt bereits hinter dem Analog-Digital-Wandler 210 digital vor, so dass nun an geeigneter Stelle ein Vergleich vorgenommen werden kann. Dieser Vergleich kann beispielsweise in einer arithmetischen Recheneinheit 230 oder aber einer arithmetischen Recheneinheit 210 durchgeführt werden.

Obwohl die einzelnen Komponenten als getrennte Einheiten beschrieben wurden, ist es dem Fachmann offenbar, dass diese Beschreibung lediglich zur Verdeutlichung der Funktion dient und keinerlei Festlegung auf eine bestimmte technische Realisierung darstellt. So ist es ohne weiteres denkbar, dass Analog-Digital-Wandler 210 und eine arithmetischen Recheneinheit eine funktionale Einheit bilden. Ebenso ist es denkbar, dass auch der Analog-Digital-Wandler 210 als auch der Digital-Analog-Wandler 230 eine funktionale Einheit bilden.

Weiterhin kann auch die Schaltstufe 400 und die Ausgangsstufe 300 eine funktionale Einheit bilden.

Wie bereits beschrieben könne Messumformer in verschiedensten Einsatzbereiche verwendet werden. Besonders bevorzugt ist jedoch die Verwendung wenn das analoge Messeingangssignal ein Temperaturmesseingangssignal.

Daher ist weiterhin vorgesehen sowohl auch ein Messsystem mit einem Temperatursensor, z.B. ein Pt100-Sensor und einen erfindungsgemäßen Messumformer bereitzustellen. Bei einem solchen Messsystem kann durch Parametrisierung ein Einzelabgleich im Prüffeld durchgeführt werden, so dass das Gesamtsystem für sicherheitstechnische Anwendungen benutzt werden kann.

**Bezugszeichenliste**

| | |
|---|---|
| Erster Übertragungskanal | 100 |
| Modulator | 110 |
| Übertrager | 120 |
| Demodulator | 130 |
| Kombinationseinheit | 140 |
| Zweiter Übertragungskanal | 200 |
| Analog-Digital-Wandler | 210 |
| Trenneinheit | 220 |
| Analog-Digital-Wandler | 230 |
| Ausgangsstufe | 300 |
| Schaltstufe | 400 |
| Rückkopplung | 410 |
| Schaltverbindung | 420 |

## Patentansprüche

1. Messumformer aufweisend
einen ersten Übertragungskanal (100), der ein analoges Messeingangssignal (I) in einer analogen Weise aufbereitet und als aufbereitetes Messsignal zur Verfügung stellt,
**dadurch gekennzeichnet, dass**
der erste Übertragungskanal (100) einen Modulator (130), einen Übertrager (120) und einen Demodulator (110) aufweist,
der Messumformer weiterhin einen zweiten Übertragungskanal (200) und eine Kombinationseinheit (140) aufweist, wobei
der zweite Übertragungskanal (200) das analoge Messeingangssignal (I) in einer digitalen Weise aufbereitet und als Beeinflussungssignal zur Verfügung stellt, und
die Kombinationseinheit (140) das aufbereitete Messsignal und das Beeinflussungssignal kombiniert und als Messausgangssignal (O) zur Verfügung stellt.

2. Messumformer gemäß Anspruch 1, **dadurch gekennzeichnet, dass** der zweite Übertragungskanal (200) einen Analog-Digital-Wandler (210) und einen Digital-Analog-Wandler (230) aufweist.

3. Messumformer gemäß einem der vorhergehenden Ansprüche, **dadurch gekennzeichnet, dass** der zweite Übertragungskanal (200) einen Opto-Koppler (220) aufweist.

4. Messumformer gemäß einem der vorhergehenden Ansprüche, **dadurch gekennzeichnet, dass** der zweite Übertragungskanal (220) eine arithmetische Recheneinheit (210, 230) aufweist.

5. Messumformer gemäß einem der vorhergehenden Ansprüche, **dadurch gekennzeichnet, dass** das Beeinflussungssignal zum Messausgangssignal weniger als zur Hälfte, bevorzugt +/- 10 ... 5 %, beiträgt.

6. Messumformer gemäß einem der vorhergehenden Ansprüche, **dadurch gekennzeichnet, dass** der zweite Übertragungskanal (200) eine Rückkoppelung des Messausgangssignal (O) zum Vergleich des Messeingangssignal (I) mit dem Messausgangssignal (O) aufweist.

7. Messumformer gemäß Anspruch 6, **dadurch gekennzeichnet, dass** die Rückkoppelung abschaltbar ausgeführt ist.

8. Messumformer gemäß einem der vorhergehenden Ansprüche, **dadurch gekennzeichnet, dass** das analoge Messeingangssignal ein Temperaturmesseingangssignal ist.

9. Messsystem aufweisend einen Temperatursensor und einen Messumformer gemäß einem der vorhergehenden Ansprüche.

## Claims

1. A measuring transducer comprising
a first transmission channel (100), which conditions an analog measurement input signal (I) in an analog manner and makes it available as a conditioned measurement signal,
**characterized in that**
the first transmission channel (100) has a modulator (130), a transmitter (120), and a demodulator (110),
the measuring transducer further comprises a second transmission channel (200) and a combination unit (140), wherein
the second transmission channel (200) conditions the analog measurement input signal (I) in a digital manner and makes it available as an influencing signal, and
the combination unit (140) combines the conditioned measurement signal and the influencing signal and makes these available as a measurement output signal (O).

2. The measuring transducer according to claim 1, **characterized in that** the second transmission channel (200) comprises an analog-to-digital converter (210) and a digital-to-analog converter (230).

3. The measuring transducer according to any one of the preceding claims, **characterized in that** the second transmission channel (200) comprises an optical coupler (220).

4. The measuring transducer according to any one of the preceding claims, **characterized in that** the second transmission channel (210) comprises an arithmetic logic unit (210, 230).

5. The measuring transducer according to any one of the preceding claims, **characterized in that** the influencing signal relative to the measurement output signal is less than one-half, preferably +/- 10 ... 5%.

6. The measuring transducer according to any one of the preceding claims, **characterized in that** the second transmission channel (200) has a feedback loop of the measurement output signal (O) for comparing the measurement input signal (I) to the measurement output signal (O).

7. The measuring transducer according to claim 6, **characterized in that** the feedback loop can be switched off.

8. The measuring transducer according to any one of the preceding claims, **characterized in that** the analog measurement input signal is a temperature measurement input signal.

9. A measuring system comprising a temperature sensor and a measuring transducer according to any one of the preceding claims.

## Revendications

1. Transducteur présentant
un premier canal de transmission (100), qui met en forme de manière analogique un signal de mesure analogique d'entrée (I) et le met à disposition sous la forme d'un signal de mesure mis en forme,
**caractérisé en ce que**
le premier canal de transmission (100) présente un modulateur (130), un transmetteur (120) et un démodulateur (110),
le transducteur présente en outre un deuxième canal de transmission (200) et une unité de combinaison (140), où
le deuxième canal de transmission (200) met le signal analogique de mesure d'entrée (I) en forme de manière numérique et le met à disposition sous la forme d'un signal d'influence, et
l'unité de combinaison (140) combine le signal de mesure mis en forme et le signal d'influence et les met à disposition sous la forme d'un signal de mesure de sortie (O).

2. Transducteur selon la revendication 1, **caractérisé en ce que** le deuxième canal de
transmission (200) présente un convertisseur analogique numérique (210) et un convertisseur numérique analogique (230).

3. Transducteur selon l'une des revendications précédentes, **caractérisé en ce que** le deuxième canal de transmission (200) présente un opto-coupleur (220).

4. Transducteur selon l'une des revendications précédentes, **caractérisé en ce que** le deuxième canal de transmission (220) présente une unité de calcul arithmétique (210, 230).

5. Transducteur selon l'une des revendications précédentes, **caractérisé en ce que** le signal d'influence contribue au signal de mesure de sortie à moins de la moitié, de préférence à +/- 10 . . . 5 %.

6. Transducteur selon l'une des revendications précédentes, **caractérisé en ce que** le deuxième canal de transmission (200) présente une rétroaction du signal de mesure de sortie (O) pour la comparaison du signal de mesure d'entrée (I) avec le signal de mesure de sortie (O).

7. Transducteur selon la revendication 6, **caractérisé en ce que** la rétroaction est exécutée de manière commutable.

8. Transducteur selon l'une des revendications précédentes, **caractérisé en ce que** le signal de mesure d'entrée analogique est un signal de mesure de température d'entrée.

9. Système de mesure présentant un capteur de température et un transducteur selon l'une des revendications précédentes.
